# EUROPÄISCHE PATENTANMELDUNG

(11) **EP 4 606 850 A2**
(43) Veröffentlichungstag der Anmeldung: **27.08.2025**
(21) Anmeldenummer: 25180787.1
(22) Anmeldetag: 16.10.2017
(51) Int. Cl.: C08K 5/521

(54) **VERFAHREN ZUR HERSTELLUNG VON POLYAMID-WERKSTOFFEN MIT VERBESSERTEN LANGZEITGEBRAUCHSEIGENSCHAFTEN**

(30) Priorität: 17.10.2016 EP 16002227
(62) Teilanmeldung aus: 17791573.3
(71) Anmelder: L. Brüggemann GmbH & Co. KG, 74076 Heilbronn (DE)
(72) Erfinder: Die Erfindernennung liegt noch nicht vor
(74) Vertreter: Grünecker Patent- und Rechtsanwälte PartG mbB

(57) **Zusammenfassung**

Die vorliegende Erfindung betrifft ein Verfahren zur Langzeitstabilisierung von Polyamiden sowie die Verwendung einer spezifischen Additivzusammensetzung zur Langzeitstabilisierung von Polyamiden.

## Beschreibung

Die vorliegende Erfindung betrifft ein Verfahren zur Langzeitstabilisierung von Polyamiden sowie die Verwendung einer spezifischen Additivzusammensetzung zur Langzeitstabilisierung von Polyamiden.

### Hintergrund der Erfindung

In Gegenwart von Luftsauerstoff finden bei Temperaturen über 70°C bzw. durch energiereiche Strahlung an der Polyamidoberfläche thermooxidative bzw. photooxidative Reaktionen statt. Dabei vergilbt die Oberfläche und wird zunehmend matt und rissig. Diese Oberflächenveränderungen führen zur Versprödung des Werkstoffs und damit zur Beeinträchtigung der mechanischen Eigenschaften des Formteils. Durch die Zugabe geeigneter Stabilisatoren kann die oxidative Schädigung des Polyamids verzögert werden, so dass sich die Zeit bis zur Versprödung der Polyamidteile hinauszögern lässt.

Dabei wird üblicherweise zwischen Stabilisatoren für verschiedene Temperaturbereiche unterschieden. Typische Klassen an Stabilisatoren für Polyamide sind Kupfer-basierte Stabilisatoren und Stabilisatoren auf Basis sterisch gehinderter Phenole. Sterisch gehinderte Phenole werden dabei meist in Kombinationen mit sekundären Antioxidantien, vor allem Phosphiten eingesetzt. Diese Blends von sterisch gehinderten Phenolen mit Phosphiten werden im Folgenden als phenolische Stabilisatoren bzw. als phenolische Antioxidantien bezeichnet. Die auf Kupfer basierenden Stabilisatoren umfassen typischer Weise mindestens eine Kupferverbindung und mindestens eine weitere halogenhaltige Komponente, die als Synergist bezeichnet wird. Die Kombination von Kupferverbindungen mit halogenhaltigen Synergisten wird im Folgenden als Kupferstabilisator bezeichnet.

Bislang werden Kupferstabilisatoren in der Praxis fast nur dann eingesetzt, wenn in der Anwendung hohe Dauergebrauchstemperaturen im Bereich über 150°C gefordert sind. Neben den Themen Verfärbung und niedrigere Kriechstromfestigkeit, welche bei der Verwendung von klassischen Kupferstabilisatoren (Kupfersalze in Kombination mit Halogensalzen) typischerweise auftreten, ist der Hauptgrund hierfür, dass gemäß der bisherigen Überzeugung im Stand der Technik die auf Kupfer basierten Hitzestabilisatoren im Temperaturbereich unter 150°C den phenolischen Antioxidantien unterlegen sind hinsichtlich Stabilisierung gegen Verlust der mechanischen Kennwerte.

Daher werden bei Anforderungen im Temperaturbereich unter 150°C im Wesentlichen phenolische Antioxidantien eingesetzt. Bei Anwendungen, die eine Stabilisierung von Polyamid-Werkstoffen über einen sehr breiten Temperaturbereich erfordern, werden bislang in der Praxis Kupferstabilisatoren (für die Hochtemperaturstabilisierung) zusammen mit phenolischen Antioxidantien kombiniert. Dies führt zu hohen Stabilisierungskosten, so dass so stabilisierte Polyamid-Werkstoffe wirtschaftlich weniger attraktiv sind.

Dies wird aus den wichtigsten Fachbücher für Kunststoffadditive deutlich, die dem Fachmann und Anwender lehren, dass Kupferstabilisatoren über 150°C sehr gut wirksam sind, phenolische Antioxidantien dagegen bei Temperaturen unter 150°C effektiver sind als Kupferstabilisatoren. Beispiele sind:
- "Plastics Additives Handbook" von Hans Zweifel, Ralph D. Maier und Michael Schiller (6th Edition 2009) S. 80-84.
- "Resistance and Stability of Polymers" von Gottfried Ehrenstein und Sonja Pongratz, Carl Hanser Verlag 01.10.2013, Kapitel 3.7.8, Seite 308 - 313.
- "Iodine Chemistry and Application"s, Tatsuo Kaiki, (1st Edition), Kapitel 31, S. 551f.
- Vortrag von J.R. Pauquet und A.G. Oertli (Ciba) gehalten am World Congress POLYAMIDE 2000, Zürich, Schweiz, 14.-16.03.2000.
Auch die Online-Plattform "Specialchem" offenbart diese Überzeugung:
http://polymeradditives.specialchem.com/selection-quide/light-stabilizers-and-antioxidants-for-polyamides/heatstabilizers-for-aliphatic-polyamides/

Die Offenlegungsschrift "Mit Kupfersalz und aliphatischem halogeniertem Phosphat stabilisierte Polyamidzusammensetzung" DE 198476216 offenbart Polyamidzusammensetzungen, die dadurch gekennzeichnet sind, dass als Stabilisator mindestens ein Kupfersalz und mindestens ein halogenhaltiges aliphatisches Phosphat enthalten sind, wodurch eine Erhöhung der Dauergebrauchstemperatur im Temperaturbereich von über 150°C, eine verbesserte Kriechstromfestigkeit sowie eine geringere Verfärbung spritzfrisch sowie nach Konditionierung erreicht werden kann.

Die DE 198 47 626 A1 offenbart eine mit Kupfersalz und aromatischer Halogenverbindung stabilisierte Polyamidzusammensetzung. Diese Lehre stellt auf die Stabilisierung des Polyamids bei gleichzeitiger Anhebung der Dauergebrauchstemperatur ab. Wärmealterungsversuche sind bei Temperaturen von 150°C und 165°C angegeben. Die Daten der Versuche bei 150°C unterscheiden sich dabei im Rahmen der Messgenauigkeit nicht von den Vergleichsdaten mit den dort getesteten konventionellen Stabilisatoren mit salzartigen Halogenverbindungen. Eine signifikante Verbesserung der Stabilisierungswirkung wird erst bei höheren Temperaturen realisiert, in Übereinstimmung mit der Zielsetzung dieser Lehre, der Stabilisierung bei erhöhten Dauergebrauchstemperaturen (165°C oder höher).

Die Patentschrift EP 1 121 388 B1 "Mit Kupferkomplexen und organischen Halogenverbindungen stabilisierte Polyamidzusammensetzungen" offenbart Polyamidzusammensetzungen, bei denen mindestens ein Komplex des Kupfers mit mindestens einer organischen Halogenverbindung zur Stabilisierung enthalten sind, wodurch eine verbesserte Wärmestabilität bei Temperaturen oberhalb 150°C, eine verbesserte Kriechstromfestigkeit und eine geringe Verfärbung spritzfrisch sowie nach Konditionierung erreicht wird.

### Aufgabe der Erfindung

Durch den immer weiter steigenden Einsatzbereich Kunststoff basierter Materialien, z.B. im Automobilbereich, werden bessere Stabilisierungskomponenten, insbesondere für Dauergebrauchstemperaturen im Bereich von unter 150°C gesucht, vor allem auch für Polyamide. Typische Dauergebrauchstemperaturen sind dabei etwa Temperaturen mit einem Temperaturmaximalwert von etwa 120°C, die beispielsweise im Elektro- oder Automobilbereich häufig gefordert werden. In diesem Temperaturbereich werden typischerweise Phenol / Phosphit Blends als Stabilisatoren eingesetzt, die jedoch eine Stabilisierung über einen Maximalzeitbereich hinaus, selbst bei Erhöhung der Einsatzmenge, nicht erlauben.

Daher stellt sich die vorliegende Erfindung die Aufgabe, einen Weg anzugeben, mit dem die gewünschte Stabilisierung bei eher niedrigen bis mittleren Dauergebrauchstemperaturen erreicht werden kann, also insbesondere Polyamidzusammensetzungen zu ermöglichen, die eine verbesserte Langzeitstabilisierung gegen Hitze über einen breiten Bereich (auch bei hohen Temperaturen über 150°C und bis 180°C) aufweisen, und gleichzeitig besonders effizient bei Temperaturen unter 150°C stabilisiert werden hinsichtlich einer deutlichen Verlängerung der möglichen Gebrauchsdauer, bevorzugt sowohl:
a) betr. Erhalt der Zugfestigkeit und der Schlagzähigkeit (Verhindern der Versprödung);
b) betr. sehr gutem Erhalt der Bruchdehnung bei gleichzeitig gutem Erhalt der Zugfestigkeit und der Schlagzähigkeit.

### Kurze Beschreibung der Erfindung

Diese Aufgabe wird durch den Gegenstand der Ansprüche 1 und 2 gelöst. Bevorzugte Ausgestaltungen sind in den Unteransprüchen angegeben, ebenso wie in der nachfolgenden Beschreibung.

### Kurze Beschreibung der Figur

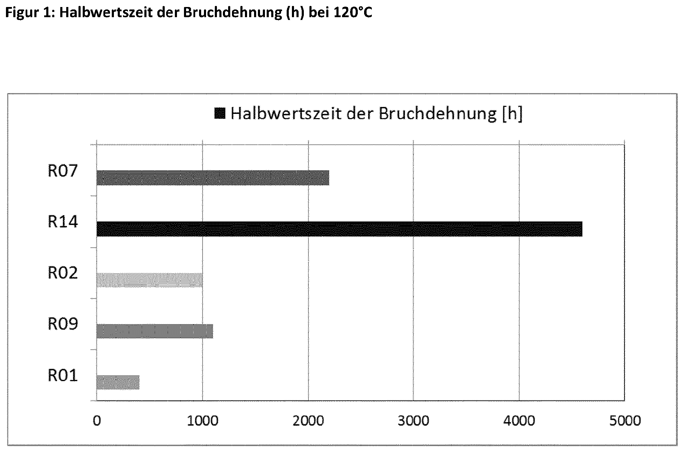

Figur 1 zeigt die Halbwertszeiten der Bruchdehnung für verschiedene Beispiele und Vergleichsbeispiele unter Wärmelagerung bei 120°C.

### Detaillierte Beschreibung der Erfindung

Die vorliegende Erfindung ermöglicht überraschenderweise die gewünschte Stabilisierung von Polyamiden durch den Einsatz bereits bekannter Komponenten, die aber bislang im Stand der Technik ausschließlich für Hochtemperaturstabilisierung bekannt waren. Dennoch kann eine deutlich verbesserte Stabilisierung bei Dauergebrauchstemperaturen von 150°C oder weniger, wie etwa 120°C erreicht werden, insbesondere auch im Vergleich mit den bislang für die Stabilisierung von Polyamiden bei niedrigeren Dauergebrauchstemperaturen eingesetzten Verbindungen. Dabei sind die erfindungsgemäß einzusetzenden Stabilisatoren gut in Polyamiden dispergierbar, so dass eine einfache Handhabbarkeit gegeben ist. Die erfindungsgemäßen Stabilisatoren können mit konventionellen Verfahren in Polyamide eingebracht und dort verteilt werden, darüber hinaus können die Stabilisatorkomponenten einfach zur Verwendung compoundiert werden, beispielsweise durch Compoundherstellung mit einer Matrix aus üblichen Materialien, wie Wachsen oder Polymeren. Die vorliegende Erfindung ermöglicht also die Realisierung der folgenden Vorteile:
1. Verbesserung der Stabilisierung von unverstärkten und verstärkten Polyamiden gegen lang andauernde Belastung bei Temperaturen unterhalb 150°C. Möglichst langes Hinauszögern eines Abbaus und damit verbundenen Herabsetzens der Gebrauchseigenschaften, insbesondere möglichst langer Erhalt der mechanischen Kennwerte Zugfestigkeit und Schlagzähigkeit.
2. Die Bruchdehnung fällt bei Hitzealterung im Allgemeinen besonders schnell und deutlich ab. Ein für die praktische Anwendung von Polyamid-Werkstoffen besonders wichtiger Vorteil ist also die erfindungsgemäße Möglichkeit einer deutlich längeren Erhaltung der Bruchdehnung bei Langzeitlagerung unter Temperaturbelastung (bei Temperaturen unter 150°C) im Vergleich zu phenolischen Antioxidantien. Eine hohe Bruchdehnung der polymeren Matrix führt (auch in verstärkten Polyamiden) zu einer deutlichen Verbesserung der Anwendungseigenschaften des ganzen Werkstoffes sowie zur Erhöhung des Energieaufnahmevermögens.
3. Die Einsatzmenge an Stabilisator kann an die gewünschte Stabilisierungszeit (Lebensdauer des Produkts) angepasst werden, da die erfindungsgemäß einzusetzenden Stabilisatoren bei Erhöhung der Einsatzmenge eine Verlängerung der stabilisierenden Eigenschaften ermöglichen, ein Effekt, der insbesondere bei phenolischen Stabilisatoren nicht so ausgeprägt ist. Diese Stabilisatoren zeigen recht schnell keine Verlängerung der Stabilisierungswirkung mehr, selbst bei deutlicher Erhöhung der Einsatzmenge. Im Gegenteil kann es bei hohen Dosierungen (beispielsweise im Bereich über 1%) sogar zu einer Verschlechterung der stabilisierenden Wirkung kommen. In Figur 1 ist die Halbwertszeit der Bruchdehnung (bestimmt bei 120°C) von Polyamid 6.6 bei Einsatz unterschiedlicher Stabilisatoren gezeigt. Probe R01 ist nicht stabilisiertes Polyamid, die Proben R02 und R09 sind mit phenolischen Stabilisatoren stabilisierte Polyamide (in allen Proben wurde das identische Polyamid 6.6 verwendet), wobei in Probe R09 die Einsatzmenge des phenolischen Antioxidans gegenüber R02 verdoppelt wurde. Einen Effekt auf die Bruchdehnungshalbwertszeit hat dies jedoch kaum. Probe R07 ist eine erfindungsgemäß stabilisierte Probe (Stabilisatormenge ist äquivalent zur Menge in Probe R02). Hier zeigt sich schon der dramatische und überraschende Anstieg der zu erzielenden Halbwertszeit (also die Zeit, die vergeht, bis der ursprüngliche Wert der Bruchdehnung auf die Hälfte abgefallen ist) gegenüber den phenolischen Stabilisatoren. Für Probe R014 wurde wiederum die Einsatzmenge verdoppelt (gegenüber R07) - hier zeigt sich eine sehr deutliche weitere Verlängerung der Halbwertszeit. Dieser Effekt ist analog auch bei den erfindungsgemäß stabilisierten Proben R06 und R13 (doppelte Additivmenge gegenüber R06) deutlich zu erkennen. Diese enorme Stabilisierungseffizienz des erfindungsgemäßen Verfahrens kann auch dazu genutzt werden, kleine Stabilisatormengen zu verwenden, um das Niveau der Dauergebrauchszeiten zu sichern, die mit phenolischen Stabilisatoren zu erreichen sind. Dadurch ergeben sich Kostenvorteile, Vorteile betr. Kennzeichnungsfreiheit sowie die Möglichkeit, mit niedrigen Halogengehalten auszukommen, so dass ein Einsatz auch in diffizilen Elektro- und Elektronik-Anwendungen erleichtert wird.
4. Durch die verbesserte Stabilisierung können ggf. Bauteile dünner ausfallen, da eine bislang als notwendig angesehene Materialstärke (aufgrund einer gewünschten Redundanz bzw. eines entsprechenden Sicherheitsbeiwertes) verringert werden kann (da die erfindungsgemäß stabilisierten Polyamide selbst bei geringeren Materialstärken länger belastbar sind).
5. Erfindungsgemäß lassen sich darüber hinaus auch noch die folgenden Vorteile realisieren:
   - Langes Hinauszögern eines Abbaus und damit verbundenen Herabsetzens der Gebrauchseigenschaften, insbesondere langer Erhalt der mechanischen Kennwerte Zugfestigkeit, Bruchdehnung und Schlagzähigkeit;
   - Effiziente Stabilisierung von Polyamiden (und Verhindern der Versprödung) über einen insgesamt sehr breiten Temperaturbereich, selbst bei Temperaturspitzen von bis zu etwa 200°C (z.B. bei Materialien, die eine eher niedrige Dauergebrauchstemperatur aushalten müssen, wobei im Lebenszyklus Temperaturspitzen auftreten können), ohne dass mit einer Beeinträchtigung der Materialqualität gerechnet werden muss (da die Wirksamkeit der erfindungsgemäß einzusetzenden Kombination aus Kupferkomponente und Synergist bei hohen Temperaturen bekannt ist). Phenolische Stabilisatoren alleine sind für derartige Anwendungen nicht geeignet, da sie einen schnellen Abbau wesentlicher Materialeigenschaften bei hohen Temperaturen (>150°C) nicht verhindern können. Bei derartigen Anwendungsanforderungen mit unterschiedlichen Temperaturbelastungen ist aufgrund der erfindungsgemäßen Stabilisierungsverfahren der Einsatz unterschiedlicher Stabilisatorsysteme für die unterschiedlichen Temperaturbereiche nicht mehr notwendig (also z.B. eine Kombination von sowohl phenolischen Stabilisatoren als auch Kupfer-basierten Stabilisatoren);
   - Farbliche Neutralität bzw. nur geringe Verfärbung nach Konditionierung;
   - Kein oder zumindest nur ein akzeptabler Einfluss auf die Kriechstromfestigkeit, was für den Einsatz in der Elektro- und Elektronikindustrie sehr wichtig ist.

Überraschenderweise kann also eine verbesserte Stabilisierung dadurch erreicht werden, dass Verfahren angewendet werden, bei denen Polyamide mit Kupferverbindungen stabilisiert werden, welche in geeigneter Weise mit einem synergistisch wirkenden halogenhaltigen aliphatischen Phosphat kombiniert sind. Mit dieser Stabilisator-Kombination versehene Polyamidzusammensetzungen weisen eine bessere Stabilisierung auf bei Temperaturen unter 150°C, vorzugsweise bei Temperaturen von 145°C oder weniger, wie 140°C oder weniger, 130°C oder weniger, wie beispielsweise bei 125°C oder weniger, insbesondere 120°C oder weniger, im Vergleich zu herkömmlichen Kupfer-basierten und / oder organischen Stabilisatoren (phenolische Antioxidantien-Kombinationen alleine und mit Phosphiten). Insbesondere werden Zugfestigkeit und Schlagzähigkeit dieser Polyamidzusammensetzungen bei Temperaturen unter 150°C deutlich länger auf hohem Niveau erhalten.

Zudem wurde überraschenderweise bei der Kombination von Komplexen des Kupfers mit halogeniertem aliphatischem Phosphat gefunden, dass speziell die Bruchdehnung nach Hitzealterung deutlich länger auf einem hohen Niveau gehalten werden kann im Vergleich mit den bisher bekannten Stabilisatorsystemen für Polyamide, auch im Vergleich zu Kombinationen von Kupfersalzen oder anderen Kupferverbindungen (die keine Kupferkomplexe sind) mit halogeniertem Phosphat oder mit anderen Halogenverbindungen einschließlich Halogensalzen. Dieser Effekt tritt speziell bei Temperaturen unter 150°C auf. Bei höheren Temperaturen z.B. bei 180°C sind keine Unterschiede im Hinblick auf Erhalt der Bruchdehnung im Vergleich zur Stabilisierung mit herkömmlichen Kupferstabilisatoren zu erkennen.

Insgesamt kann also mit den erfindungsgemäß zu verwendenden StabilisatorKombinationen eine Langzeitstabilisierung über einen extrem breiten Temperaturbereich mit einer einzigen stabilisierenden Komponente (die erfindungsgemäß einzusetzenden Kombination) erreicht werden. Die nachfolgenden Ausführungen und Beispiele zeigen, dass in Ergänzung zur diskutierten, überraschenden Stabilisierung bei Temperaturen von unterhalb 150°C mit der erfindungsgemäß einzusetzenden Kombination, zusätzlich auch eine Stabilisierung bei einem Temperaturbereich von deutlich oberhalb 150°C, wie oberhalb von 180°C bis etwa 200°C sicher möglich ist. Im Stand der Technik werden für derartige Stabilisierungen über einen derartig breiten Temperaturbereich Kombinationen an unterschiedlichen Stabilisatoren als notwendig erachtet. So wird typischer Weise für die Stabilisierung bei niedrigen Temperaturen der Einsatz der beschriebenen phenolischen Verbindungen als wesentlich erachtet, die jedoch bei Temperaturen von oberhalb 150°C de facto keine Wirkung mehr zeigen. Daher muss im Stand der Technik, wenn eine Stabilisierung beispielsweise für den Temperaturbereich von 120°C bis 180°C erwünscht ist, eine Kombination der phenolischen Antioxidantien mit anderen, beispielsweise auf Kupfer basierenden Stabilisatoren für den Temperaturbereich oberhalb 150°C, eingesetzt werden. Derartige Kombinationen werden in Übereinstimmung mit den Befunden der vorliegenden Erfindung nicht länger notwendig sein, da die speziellen Stabilisatorkombinationen der vorliegenden Erfindung sicher den gesamten Temperaturbereich abdecken können.

Somit stellt die vorliegende Erfindung zusätzlich zum angegebenen Verfahren und der angegebenen Verwendung zur Langzeitstabilisierung bei Temperaturen von weniger als 150°C ein System zur Verfügung, das sicher Polyamide über einen breiten Temperaturbereich stabilisieren kann, wobei dieser Temperaturbereich Temperaturen von unterhalb 150°C und ebenso Temperaturen von 150°C oder mehr umfasst. Der Temperaturbereich von 150°C oder höher erstreckt sich insbesondere über Temperaturen von 160°C oder höher, einschließlich 180°C oder höher und in üblicher Weise bis zu 200°C. Die vorliegende Erfindung ermöglicht es also die im Stand der Technik dafür als notwendig angesehenen Kombinationen mehrerer unterschiedlicher Stabilisierungssysteme durch ein einziges System, wie hier beschrieben zu ersetzen. Stabilisierte Polyamidzusammensetzungen dieses Aspekts der vorliegenden Erfindung umfassen daher bevorzugt als Stabilisator ausschließlich das hier beschriebene System zur Temperaturstabilisierung. Das vereinfacht sowohl die Compoundierung und ermöglicht Kostenersparnisse, da insbesondere auf die phenolischen Systeme verzichtet werden kann. Dazu, wie insbesondere durch die nachfolgenden experimentellen Daten belegt, wird ein insgesamt verbessertes System zur Verfügung gestellt, so dass sich auch deutliche Verlängerungen der Stabilisierungszeiträume realisieren lassen.

Ist eine Stabilisierung in einem nach oben noch breiteren Temperaturfenster gewünscht, also insbesondere bei Temperaturen von oberhalb 200°C, können bekannte Hochtemperaturstabilisatoren für Polyamide zum Einsatz kommen. Insbesondere können hierzu Polyole mit 2 oder mehr Hydroxylgruppen eingesetzt werden. Bekannte Beispiele derartiger Verbindungen sind Polyole mit 2 bis 12 Hydroxylgruppen und einem Molekulargewicht von 64 bis 2000 g/mol. Besonders geeignete Beispiele davon sind Pentaerythritol, Dipentaerythritol und Tripentaerythritol, insbesondere Dipentaerythritol. Derartige Verbindungen können in konventioneller Weise in das Polyamid eingebracht werden. Insbesondere geeignet ist eine Einbringung über eine Vormischung, besonders bevorzugt über ein Masterbatch, wobei die Vormischung bzw. das Masterbatch auch die anderen stabilisierenden Komponenten in Übereinstimmung mit der vorliegenden Erfindung enthält. Die Einsatzmengen derartiger weiterer Hochtemperaturstabilisatoren können vom Fachmann basierend auf bereits bekannten Informationen ausgewählt oder durch einfache Versuche für eine gewünschte Polyamidzusammensetzung bestimmt werden.

Mit den erfindungsgemäß stabilisierten Polyamidzusammensetzungen auf Basis von Kupferkomplexen und halogenierten aliphatischen Phosphaten werden zudem gleichzeitig eine sehr gute Farbe und eine hohe Kriechstromfestigkeit erreicht. Dies erlaubt den Einsatz auch in Bereichen, die eine hohe Kriechstromfestigkeit in Form eines CTI-Wertes (comparative tracking index) von 600 V (bei unverstärkten Polyamiden) fordern.

Überraschend ist im Zusammenhang mit der vorliegenden Erfindung, dass durch eine Kombination einer Kupferkomponente mit einem spezifischen Synergisten, wie in den Ansprüchen 1 und 2 definiert, eine unerwartete Verbesserung der Stabilisierung von Polyamiden erreicht werden kann, die sowohl die klassischen phenolischen Stabilisatoren übertrifft, als auch mit anderen Kombinationen an bekannten Kupferstabilisatoren und halogenhaltigem Synergisten nicht erreicht werden kann. Dies wird insbesondere auch in den nachfolgenden Beispielen belegt, wo herkömmliche Kupfer-basierte Systeme (Kupfersalz und Halogensalz bzw. Kupferkomplex und halogenhaltige organische Verbindung (kein aliphatisches Phosphat)) die mit der erfindungsgemäßen Kombination zu erreichenden Effekte nicht ermöglichen.

Die erfindungsgemäß einzusetzenden Kupferstabilisatoren bestehen aus zwei wesentlichen Komponenten, nämlich einem Gemisch von Kupferverbindungen und speziellen halogenhaltigen Verbindungen (hier auch als Synergisten bezeichnet). Die erfindungsgemäß eingesetzte Kupferverbindung kann ein beliebiges Kupfersalz (Cul, CuBr, Kupferacetat, CuCN, Kupferstearat,..) oder eine beliebige andere Kupferverbindung wie z.B. CuO, Cu₂O, Kupfercarbonat oder ein beliebiger Komplex des Kupfers sein. Der erfindungsgemäß einzusetzende Synergist ist ein halogenhaltiges aliphatisches Phosphat.

Diese beiden Komponenten werden in typischer Weise in Mengen eingesetzt, so dass sich ein Verhältnis von Cu : Halogen von 1:1 bis 1:50 (Molverhältnis) ergibt, bevorzugt 1:4 bis 1:20, stärker bevorzugt 1:6 bis 1:15.

Die Mengen an Kupfer sowie Halogen im Polyamid werden in Abhängigkeit von der gewünschten Verwendung des Polyamids sowie von der gewünschten Stabilisierung ausgewählt. Die Menge an Kupfer, die dabei verwendet wird, ist nicht beschränkt, solange die mechanischen Eigenschaften des Polyamids nicht negativ beeinträchtigt werden. Die Einsatzmengen von Kupfer liegen meist im Bereich von 1 bis 1000 ppm Cu, bevorzugt 3 bis 200 ppm Cu, stärker bevorzugt 5 bis 150 ppm Cu. Konkrete Beispiele sind 33 ppm, 66 ppm und 100 ppm. Die Einsatzmengen an Synergist (jeweils bezogen auf ppm Halogen) ergeben sich damit aus den vorstehend offenbarten Verhältnissen. Die Zugabemenge für den Synergisten unterliegt keiner besonderen Beschränkung. Zugaben über 1% führen aber im Allgemeinen zu keiner Verbesserung der Stabilisatorwirkung. Die Einsatzmengen liegen typischerweise im Bereich 10 bis 10.000 ppm. Bevorzugte Mengen sind im Bereich von 30 bis 2000 ppm, stärker bevorzugt 50 bis 1500 ppm.

Erfindungsgemäß können alle üblichen Polyamide stabilisiert werden. Polyamide sind Polymere mit wiederkehrenden Carbonamidgruppen -CO-NH- in der Hauptkette. Sie bilden sich aus
(a) Aminocarbonsäuren oder deren funktionellen Derivaten, z.B. Lactamen; oder aus
(b) Diaminen und Dicarbonsäuren oder deren funktionellen Derivaten.

Durch Variationen der Monomerbausteine sind Polyamide in großer Vielfalt zugänglich. Die wichtigsten Vertreter sind Polyamid 6 aus ε-Caprolactam , Polyamid 6.6 aus Hexamethylendiamin und Adipinsäure, Polyamid 6.10 und 6.12, Polyamid 11, Polyamid 12, PACM-12 sowie Polyamid 6-3-T, PA4.6 und semiaromatische Polyamide (Polyphthalamide PPA).

Erfindungsgemäß können aber auch alle weiteren Polyamide stabilisiert werden, beispielsweise Copolyamide oder Copolymere von Polyamiden mit anderen Segmenten, beispielsweise mit Polyestern. Es ist auch möglich, Blends verschiedener Polyamide und Blends aus Polyamiden mit anderen Polymeren zu stabilisieren. Besonders bevorzugt sind dabei Polyamid 6 sowie Polyamid 6.6.

Die erfindungsgemäßen Stabilisatormischungen können in allen zuvor genannten Polyamiden und Blends, sowohl in ungefüllten bzw. unverstärkten, als auch in gefüllten bzw. verstärkten Polyamiden eingesetzt werden. Als Füllstoffe / Verstärkungsstoffe können beispielsweise Glasfasern, Kohlefasern, Glaskugeln, Kieselgur, feinkörnige Mineralien, Talkum, Kaolin, Schichtsilikate, CaF₂, CaCO₃ und Aluminiumoxide Verwendung finden.

Erfindungsgemäß einzusetzende Kupferkomplexe sind Komplexe von Kupfer mit Liganden wie Triphenylphosphine, Mercaptobenzimidazole, Glycin, Oxalate und Pyridine, Auch einsetzbar sind Chelatliganden, wie Ethylendiamintetraacetate, Acetylacetonate, Ethylendiamine, Diethylentriamine, Triethylentetraamine Phopsphinchelatliganden oder Bipyridine. Beispiele für die bevorzugten Phosphinchelatliganden sind 1,2-Bis-(dimethylphosphino)-ethan, Bis-(2-diphenylphosphinoethyl)-phenylphosphin, 1,6-(Bis-(diphenylphosphino))-hexan, 1,5-Bis-(diphenylphosphino)-pentan, Bis-(diphenylphosphino)methan, 1,2-Bis-(diphenylphosphino)ethan, 1,3-Bis-(diphenylphosphino)propan, 1,4-Bis-(diphenylphosphino)butan und 2,2'-Bis-(diphenylphosphino)-1,1'-binaphthyl.

Diese Liganden können einzeln oder in Kombination zur Komplexbildung eingesetzt werden. Die dazu nötigen Synthesen sind dem Fachmann bekannt oder in der Fachliteratur zur Komplexchemie beschrieben. Wie üblich können diese Komplexe neben den oben genannten Liganden noch typische anorganische Liganden enthalten, wie Wasser, Chlorid, Cyanoliganden usw.

Bevorzugt sind Kupferkomplexe mit den Komplexliganden Triphenylphosphine, Mercaptobenzimidazole, Acetylacetonate und Oxalate. Insbesondere bevorzugt sind Triphenylphosphine und Mercaptobenzimidazole.

Bevorzugte erfindungsgemäß eingesetzte Komplexe des Kupfers werden üblicherweise durch Reaktion von Kupfer(I)ionen mit den Phosphin- bzw. Mercaptobenzimidazolverbindungen gebildet. Beispielsweise können diese Komplexe durch Umsetzung von Triphenylphosphin mit einem in Chloroform suspendierten Kupfer(I)halogenid erhalten werden (G. Kosta, E. Reisenhofer und L. Stafani, J. Inorg. Nukl. Chem. 27 (1965) 2581). Es ist aber auch möglich, Kupfer(II)verbindungen mit Triphenylphosphin reduktiv umzusetzen, um so die Kupfer(I)additionsverbindungen zu erhalten (F.U. Jardine, L. Rule, A.G. Vohrei, J. Chem. Soc. (A) 238-241 (1970)).

Die erfindungsgemäß verwendeten Komplexe können aber auch durch jedes weitere geeignete Verfahren hergestellt werden. Geeignete Kupferverbindungen zur Herstellung dieser Komplexe sind die Kupfer(I)- oder Kupfer(II)salze der Halogenwasserstoffsäuren, der Cyanwasserstoffsäure oder die Kupfersalze der aliphatischen Carbonsäuren. Beispiele für geeignete Kupfersalze sind Kupfer(I)chlorid, Kupfer(I)bromid, Kupfer(I)iodid, Kupfer(I)cyanid, Kupfer(II)chlorid, Kupfer(II)acetat oder Kupfer(II)stearat.

Besonders bevorzugt sind dabei Kupfer(I)iodid sowie Kupfer(I)cyanid.

Prinzipiell sind alle Alkyl- oder Arylphosphine geeignet. Beispiele erfindungsgemäß einsetzbarer Phosphine sind Triphenylphosphin (TPP), substituierte Triphenylphosphine, Trialkylphosphine und Diarylphosphine. Ein Beispiel eines geeigneten Trialkylphosphins ist Tris-(n-butyl)phosphin. Generell sind die Triphenylphosphinkomplexe stabiler als die Trialkylphosphinkomplexe. Triphenylphosphin ist zudem aufgrund der kommerziellen Verfügbarkeit auch in wirtschaftlicher Hinsicht bevorzugt.

Beispiele geeigneter Komplexe lassen sich durch die folgenden Formeln darstellen:
[Cu(PPh₃)₃X], [Cu₂X₂(PPh₃)₃], [Cu(PPh₃)X]₄ sowie [Cu(PPh₃)₂X], wobei X ausgewählt ist aus Cl, Br, I, CN, SCN oder 2-MBI.

Erfindungsgemäß einsetzbare Komplexe können aber auch zusätzlich noch weitere Komplexliganden enthalten. Beispiele sind Bipyridyl (z.B. CuX (PPh₃) (bipy), wobei X Cl, Br oder I ist), Bichinolin (z.B. CuX (PPh₃) (biquin), wobei X Cl, Br oder I ist) sowie 1,10-Phenanthrolin, o-Phenylenbis(dimethylarsin), 1,2-Bis(diphenylphosphino)ethan und Terpyridyl.

Diese Komplexe sind im Allgemeinen elektrisch nicht leitend und diamagnetisch. Sie sind üblicherweise farblos und fallen als wasserunlösliche Kristalle an, die unzersetzt schmelzen. In polaren organischen Lösungsmitteln, wie DMF, Chloroform und heißem Ethanol, sind die Komplexe leicht löslich.

Das erfindungsgemäß einzusetzende Kupfersalz kann irgendein beliebiges Kupfersalz sein.

Bevorzugt sind Salze des einwertigen oder zweiwertigen Kupfers mit anorganischen oder organischen Säuren.

Beispiele geeigneter Kupfersalze sind die Kupfer(I)salze, wie Cul, CuBr, CuCI oder CuCN, Kupfer(II)salze, wie CuCl₂, CuBr₂, CuI₂, Kupferacetat, Kupfersulfat, Kupferstearat, Kupferpropionat, Kupferbutyrat, Kupferlactat, Kupferbenzoat oder Kupfernitrat, sowie die Ammoniumkomplexe der oben genannten Salze.

Weiterhin können auch Verbindungen, wie Kupferacetylacetonat oder Kupfer-EDTA, verwendet werden. Es ist auch möglich, Mischungen verschiedener Kupfersalze einzusetzen. Gegebenenfalls kann darüberhinaus auch Kupferpulver eingesetzt werden.

Bevorzugt sind dabei die Kupfer(I)halogenide und die Kupfersalze organischer Säuren. Insbesondere bevorzugt sind Kupfer(I)iodid und Kupferacetat.

Die zuvor genannten Kupferkomponenten können einzeln oder in Mischungen aus zwei oder mehr Komponenten eingesetzt werden.

Der erfindungsgemäß einzusetzende Synergist ist ein halogenhaltiges aliphatisches Phosphat.

Erfindungsgemäß wird also mindestens ein halogenhaltiges aliphatisches Phosphat, bevorzugt in Form eines Tris(halohydrocarbyl)-phosphats oder eines Phosphonatesters eingesetzt. Bevorzugt sind Tris(bromohydrocarbyl)-phosphate (bromierte aliphatische Phosphate). Insbesondere sind bei diesen Verbindungen keine Wasserstoffatome an einem Alkyl-C-Atom gebunden, welches sich in alpha-Position zu einem mit einem Halogen verbundenen C-Atom befindet. Dadurch können keine Dehydrohalogenierungsreaktionen auftreten. Beispielverbindungen sind Tris(3-bromo-2,2 bis(bromomethyl)propyl)phosphate, Tris (dibromoneopentyl)phosphat, Tris(trichloroneopentyl)phosphate, Tris(chlorodibromoneopentyl)phosphate und Tris(bromodichloroneopentyl)phosphate. Bevorzugt sind Tris-(dibromoneopentyl)phosphat und Tris (tribromoneopentyl)phosphat.

Es ist auch möglich, Mischungen von mehreren halogenhaltigen aliphatischen Phosphaten einzusetzen. Weiterhin können auch Mischungen von halogenhaltigen aliphatischen Phosphaten mit aromatischen halogenierten Verbindungen, z.B. bromierten Polystyrolen oder Poly(pentabromobenzyl)acrylaten eingesetzt werden. Als aromatische halogenierte Verbindungen können weiterhin Tris(haloaromatische)phosphate oder Phosphonatester eingesetzt werden, z.B. Tris(2,4-dibromophenyl)phosphat, Tris(2,4-dichlorophenyl)phosphat und Tris(2,4,6-tribromophenyl)phosphat. Bevorzugt ist aber der Einsatz lediglich der halogenierten aliphatischen Phosphate als Synergist.

Bevorzugte Kombinationen (im folgenden Stabilisator-Blends genannt) sind Kombinationen aus Kupfersalz, insbesondere Cul und den hier beschriebenen Phosphaten, insbesondere bromhaltigen Phosphaten, sowie Kombinationen aus Kupferkomplexen, insbesondere Komplexen mit TPP Liganden und den hier beschriebenen Phosphaten, insbesondere bromhaltigen Phosphaten.

Polyamid und Stabilisator-Blend werden entweder miteinander aufgeschmolzen und vermischt, oder es wird zunächst das Polyamid aufgeschmolzen und anschließend der Stabilisator-Blend eingemischt, wobei letztere Variante bevorzugt ist. In einer bevorzugten Ausführungsform wird der Stabilisator-Blend in Form einer Vormischung (Konzentrat oder Masterbatch) zum aufgeschmolzenen Polyamid zugegeben.

Geeignete Mischvorrichtungen sind dem Fachmann geläufig und umfassen Mischwalzwerke, diskontinuierlich arbeitende Innenmischer und Kneter, kontinuierlich arbeitende Extruder und Kneter sowie statische Mischer. Bevorzugt ist dabei der Einsatz von kontinuierlich arbeitenden Extrudern, sowohl Einschnecken- als auch Doppelschneckenextruder, die eine gute Vermischung ermöglichen. Dabei wird üblicherweise das Polyamid zunächst im Extruder aufgeschmolzen und der Stabilisator-Blend dann durch geeignete Öffnungen eindosiert (gravimetrisch oder volumetrisch). Diese Verfahren sowie die dazu nötigen Vorrichtungen sind dem Fachmann bekannt.

Es ist aber auch möglich, die stabilisierenden Komponenten schon bei der Herstellung des Polyamids, d.h. der Monomermischung, zuzusetzen. Dadurch ist eine sehr gute Durchmischung ohne zusätzlichen Mischvorgang möglich, was Herstellungskosten und - zeiten senkt.

Wird ein Vorkonzentrat des Stabilisator-Blends verwendet, so kann dieses Vorkonzentrat in diskontinuierlich arbeitenden Mischern, die eine sehr gute, homogene Verteilung ermöglichen, hergestellt werden, beispielsweise in einem Buss-Kneter. Üblicherweise werden aber kontinuierliche Mischer verwendet, wie bevorzugt Doppelschneckenextruder oder ZSK-Extruder. Als Matrixmaterial wird dabei üblicherweise dasselbe Polyamid verwendet, das anschließend mit dem Vorkonzentrat vermischt wird. Es ist aber auch möglich, ein anderes Polyamid oder ein anderes Polymer zu wählen. Optional können weitere Additive während der Masterbatch-Herstellung zugegeben werden.

Alternativ hierzu kann in einer weiteren bevorzugten Ausführungsform ein Vorkonzentrat durch ein Vermischen des Stabilisator-Blends zusammen mit weiteren Additiven und /oder Zuschlagsstoffen, beispielsweise Gleitmittel, Entformungsmittel, Nukleierungsmittel etc. hergestellt werden und in der Folge agglomeriert bzw. pelletiert, kompaktiert oder tablettiert werden. Die entsprechenden Verfahren sowie die dazu nötigen Vorrichtungen sind dem Fachmann bekannt.

Die genannten Additive und/oder Zuschlagstoffe können aber auch separat im erfindungsgemäßen Verfahren eingesetzt werden, beispielsweise durch eine separate Eindosierung bei der Herstellung erfindungsgemäß stabilisierter Polyamide.

Ein weiterer positiver Effekt der vorliegenden Erfindung betrifft die Aspekte Arbeitssicherheit, Umweltschutz und Einsetzbarkeit in Elektro- und Elektronikanwendungen (trotz Gehalts an halogenhaltigen Verbindungen). Klassische Kupferstabilisatoren sowie halogenhaltige Materialien unterliegen besonderen Bestimmungen im Hinblick auf Kennzeichnung sowie Transport, Lagerung und Handhabung gemäß CLP Verordnung Nr. 1272/2008.

Ein kritisches Thema beim Einsatz von halogenhaltigen Materialien ist das Thema Korrosion, vor allem Elektrokorrosion. In diesem Zusammenhang werden Halogene, insbesondere Brom und Chlor, aber auch lod, als schädlich eingeschätzt für elektrische Bauteile aufgrund von Wechselwirkungen der Halogenid-Anionen mit intermetallischen Phasen. Daher ist eine Forderung nach Reduzierung des Halogengehalts in der Elektro- und Elektronikindustrie inzwischen weit verbreitet. In Anlehnung an internationale Standards IEC 61249-2-21 und EN 61249-2-21 und IPC 4101 für PCB-Materialien (printed circuit boards) gelten dabei Materialien, die weniger als 1500 ppm an Cl und Br enthalten, bei einer Höchstmenge an Br und Cl von jeweils 900 ppm als halogenfrei. Die erfindungsgemäß einzusetzende Stabilisatorkombination kann aufgrund der extrem guten Wirksamkeit niedrig dosiert eingesetzt werden, so dass entsprechende Grenzwerte eingehalten werden können. Auch ist es möglich bereits bei der Herstellung der Stabilisatorkombinationen die Konzentrationen an Kupfer und an Halogenen niedrig zu halten, beispielsweise durch Herstellung der zuvor beschriebenen Vorkonzentrate. Auf diese Weise werden niedrig konzentrierte Additive (bezogen auf die erfindungsgemäße Stabilisatorkombination) zugänglich, mit den bereits vorstehend beschriebenen Vorteilen. Insgesamt wird so auch die Handhabung der erfindungsgemäß einzusetzenden Stabilisatorkomponenten für den Anwender vereinfacht, da keine Kennzeichnung nach GHS / CLP-Verordnung (EG) Nr. 1272/2008 erforderlich wird. Dies führt zu reduzierten Kosten unter anderem bei Lagerung und Transport.

Derartige Materialien weisen auch weniger Risiken im Hinblick auf Umweltgefährdung und Arbeitssicherheit auf.

Die nachfolgenden Beispiele erläutern die Erfindung.

### Beispiele:

In allen Beispielen wurde Polyamid mit den genannten Stabilisatoren in konventioneller Weise compoundiert und die zu testenden mechanischen und anderen Eigenschaften an Prüfkörpern evaluiert. Die Alterungsbedingungen sind jeweils angegeben.

Es wurde ein Polyamid 6.6 der Firma BASF verwendet (Ultramid A27 E).

Die Compondierung erfolgte mit einem Doppelschneckenextruder der Firma Leistritz ZSE27MAXX - 48D.

Die Additive wurden gravimetrisch während der Compoundierung zudosiert.

Nach dem Trocknen wurden aus dem Compound auf einer Spritzgießmaschine "Demag Ergotech 60/370-120 concept" Norm-Prüfstäbe zur Bestimmung der mechanischen Kennwerte (ISO 527) und der Schlagzähigkeit (ISO 179/1eU) hergestellt.

In Wärmeumluftöfen wurden die Prüfstäbe bei den in den Beispielen genannten Temperaturen (120°C, 140°C, 150°C und 180°C) gelagert.

Die Messung von E-Modul [MPa], Zugfestigkeit [MPa] (Dehnung [%]) und Bruchspannung [MPa] (Dehnung [%]) erfolgte im Zugversuch nach ISO 527 mit einer statischen Materialprüfmaschine Zwick Z010.

Die Messung der Schlagzähigkeit erfolgte gemäß ISO 179/1eU im Schlagbiegeversuch nach Charpy mit einem Pendelschlagwerk HIT PSW 5,5J.

Verwendete chemische Verbindungen und Abkürzungen:
TPP: Triphenylphosphin; P(C6H5)3
PDBS: Polydibromstyrol; [CH2-CH(C6H3Br2)-]n
Phosphat 1: Tris-(Tribromoneopentyl)-phosphat; C₁₅Br₉H₂₄O₄P
Phenol/Phosphit Blend B1171: 1.1 Mischung aus Tris-(2,4-di-tert.butylphenyl)phosphit und N,N'-hexane-1,6-diylbis(3-(3,5-di-tert.-butyl-4-hydroxyphenylpropionamid))

**Tabelle 1: Stabilisierung von Polyamid 6.6 natur; Wärmealterung bei 120°C Vergleichsversuche mit phenolischen Antioxidantien und anderen Kupferstabilisatoren (erfinderische Kombinationen und Vergleichsvarianten); Messung der Zugfestigkeit, Bruchdehnung und Schlagzähigkeit an den entsprechenden Prüfkörpern. Bei den Kupferstabilisatoren betrug die Cu-Konzentration 33ppm und die Halogenkonzentration 400ppm.**

| Es wurde die Zeit bestimmt, bis die Schlagzähigkeit auf den Absolutwert von 10 kJ/m2 fällt. Weiterhin wurde die Zeit bestimmt, bis die Zugfestigkeit auf den 90%-Wert der Ausgangsfestigkeit abfällt und bis die Bruchdehnung die Hälfte des Ausgangswertes erreicht (Halbwert-Messung). | | | | | |
|---|---|---|---|---|---|
| Reihe | Typ | Zusammensetzung | Zeit bis Erreichen von 90% der Zugfestigkeit | Halbwertszeit der Bruchdehnung | Zeit bis Schlagzähigkeit von 10 kJ/m2 unterschritten wird |
| R01 | | Ohne Stabilisator | 180 h | 400 h | < 500 h |
| R02 | Vergleich | 0,5% B1171 (Phenol/Phosphit Blend) | 1.500 h | 1.000 h | 2.400 h |
| R03 | Vergleich | CuI / KI | 2.200 h | 1.300 h | 3.400 h |
| R04 | Vergleich | CuI(TPP)₃ / PDBS (aromatische Halogenverbindung) | 1.200 h | 1.300 h | < 2.000 h |
| R05 | Erfindung | CuI / Phosphat 1 | 4.300 h | 1.500 h | 4.800 h |
| R06 | Erfindung | CuI(TPP) / Phosphat 1 | > 5.000 h (97% nach 5.000h) | 2.500 h | 4.700 h |
| R07 | Erfindung | CuI(TPP)₂ / Phosphat 1 | > 5.000 h (92% nach 5.000h) | 2.200 h | 4.500 h |

**Tabelle 2: Stabilisierung von Polyamid 6.6 natur; Wärmealterung bei 120°C Vergleichsversuche mit phenolischen Antioxidantien und Kupferstabilisatoren (erfinderische Kombinationen und Vergleichsvarianten); Messung von Zugfestigkeit und Bruchdehnung an den entsprechenden Prüfkörpern. Bei den Kupferstabilisatoren betrug die Cu-Konzentration 66ppm und die Halogenkonzentration 800 ppm.**

| Es wurde die Zeit bestimmt, bis die Zugfestigkeit auf den 70%-Wert der Ausgangsfestigkeit abfällt und die Zeit, bis die Bruchdehnung die Hälfte des Ausgangswertes erreicht (Halbwert-Messung). | | | | |
|---|---|---|---|---|
| Reihe | Typ | Zusammensetzung | Zeit bis Erreichen von 70% der Anfangszugfestigkeit | Halbwertszeit der Bruchdehnung |
| R08 | | Ohne Stabilisator | 500 h | 400 h |
| R09 | Vergleich | 1% B1171 (Phenol/Phosphit Blend) | 2.100h | 1.100h |
| R10 | Vergleich | CuI / KI | 6.200 h | 3.300 h |
| R11 | Vergleich | CuI(TPP)3 / PDBS | 5.900 h | 1.000 h |
| R12 | Vergleich | CuI(TPP) / PDBS | 5.800 h | 1.300 h |
| R13 | Erfindung | CuI(TPP) / Phosphat 1 | 9.200 h | 4.700 h |
| R14 | Erfindung | CuI(TPP)2 / Phosphat 1 | 9.800 h | 4.600 h |

**Tabelle 3: Stabilisierung von Polyamid 6.6 natur; Wärmealterung bei 180°C**

| Vergleichsversuche mit Kupferstabilisatoren (erfinderische Kombinationen und Vergleichsvariante); | | | | |
|---|---|---|---|---|
| Messung der Zugfestigkeit, Bruchdehnung und Schlagzähigkeit an den entsprechenden Prüfkörpern. | | | | |
| Bei den Kupferstabilisatoren betrug die Cu-Konzentration 100ppm und die Halogenkonzentration 1200ppm. | | | | |
| Es wurden die Zeiten bestimmt, bis Schlagzähigkeit, Zugfestigkeit und Bruchdehnung die Hälfte des jeweiligen Ausgangswertes erreichen (Halbwert-Messungen). | | | | |
| Typ | Zusammensetzung | Halbwertszeit der Zugfestigkeit | Halbwertszeit der Bruchdehnung | Halbwertszeit der Schlagzähigkeit |
| | Ohne Stabilisator | 60 h | 24 h | 24 h |
| Vergleich | CuI / KI | 650 h | 250 h | 240 h |
| Erfindung | CuI / Phosphat 1 | 720 h | 240 h | 240 h |
| Erfindung | CuI(TPP)2 / Phosphat 1 | 700 h | 240 h | 230 h |

**Tabelle 4: Farbe und Kriechstromfestigkeit von Polyamid 6.6**

| Vergleichsversuche mit phenolischen Antioxidantien und anderen Kupferstabilisatoren (erfinderische Kombinationen und Vergleichsvarianten); | | | | |
|---|---|---|---|---|
| Bei den Kupferstabilisatoren Zugabe von 100ppm Cu / 1000ppm Halogen. | | | | |
| Es wurden aus den oben beschriebenen Granulaten Prüfplättchen von 3x5 cm und 3 mm Dicke auf der Spritzgießmaschine hergestellt und die CTI-Werte gemäß der Norm IEC-60112 gemessen. Die Verfärbung der Prüfplättchen wurde optisch beurteilt. | | | | |
| Typ | Zusammensetzung | Farbe nach Konditionierung | Kriechstromfestigkeit CTI-Wert [V] | Einstufung des jeweils verwendeten Stabilisatorblends* auf Grundlage der Verordnung (EG) Nr. 1272/2008 [CLP-Verordnung] |
| | Ohne Stabilisator | farblos | 600 | - |
| Vergleich | 0,5% B1171 (Phenol/Phosphit Blend) | farblos | 600 | nicht eingestuft* |
| Vergleich | CuI / KI | hellgrün | 450 | * GHS05, GHS07, GHS08, GHS09 |
| Erfindung | CuI / Phosphat 1 | blaugrün | 550 | nicht eingestuft* |
| Erfindung | CuI(TPP) / Phosphat 1 | Schwach bläulich | 600 | nicht eingestuft* |
| Erfindung | CuI(TPP)2 / Phosphat 1 | farblos | 600 | nicht eingestuft* |

| | | | | |
|---|---|---|---|---|
| * gilt für typische Formulierungen der Stabilisatorblends, die so abgestimmt sind, dass die Zugabemenge im Bereich 0,5 bis 3% Stabilisator (bezogen auf den Polyamidanteil) liegt. | | | | |

Die Tabellen 1 bis 4 fassen unterschiedliche Versuche und Vergleichsversuche zusammen. Diese demonstrieren eindrücklich die mit der vorliegenden Erfindung verbundenen Vorteile. So ist in Tabelle 1 ersichtlich, dass die erfindungsgemäß eingesetzten Stabilisatorkomponenten das mechanische Eigenschaftsprofil des stabilisierten Polyamids über wesentlich längere Zeiträume in einem sehr guten Bereich halten können, verglichen mit den phenolischen Standardstabilisatoren, aber auch verglichen mit bekannten auf Kupfer basierenden Systemen. So zeigen die Stabilisatorsysteme Kupferiodid/Kaliumiodid sowie Kupferkomplex und aromatische Halogenverbindungen zwar Stabilisatoreffekte vergleichbar mit den phenolischen Stabilisatoren, jedoch kann das hohe Niveau der erfindungsgemäß stabilisierten Polyamide nicht erreicht werden.

In Tabelle 2 sind korrespondierende Versuche zusammengefasst, jedoch mit erhöhten Stabilisatormengen. Hier zeigt sich, dass eine Erhöhung der Menge an phenolischem Stabilisator nur zu geringen Verbesserungen gegenüber niedrigeren Gehalten führt. Hier wird ein Plateau erreicht, so dass selbst weitere Erhöhungen der Einsatzmenge zu keinen weiteren Verbesserungen führen. Im Gegensatz dazu zeigen die erfindungsgemäßen Stabilisatorkombinationen eine deutliche Verlängerung der Stabilisierungswirkung.

In Tabelle 3 sind Wärmealterungsversuche bei hohen Temperaturen zusammengefasst. Hier zeigt sich, dass sowohl erfindungsgemäße Kombinationen als auch konventionelle auf Kupfer basierende Systeme (hier Kupferiodid/Kaliumiodid) in etwa gleiche stabilisierende Effekte zeigen, was erneut als Beleg dafür genommen werden kann, dass die verbesserte Stabilisierungswirkung bei niedrigen Temperaturen für die erfindungsgemäßen Kombinationen als überraschend anzusehen ist, da bei den für diese Stabilisatoren typischen höheren Temperaturen kein wesentlicher Unterschied in der Stabilisierungswirkung zu sehen ist.

In Tabelle 4 sind Versuche und Vergleichsversuche angegeben, die die Eignung der jeweiligen Stabilisatoren zur Stabilisierung von Polyamiden aufführt, die im Bereich Elektrik/Elektronik Einsatz finden sollen. Hier ist insbesondere der CTI-Wert relevant, da in vielen Bereichen stabilisierte Polyamide nur dann Einsatz finden, wenn der CTI-Wert 600 V beträgt, oder zumindest nicht sehr weit unter 600 V liegt. Hier ist gezeigt, dass die erfindungsgemäßen Stabilisatorkombinationen diese Anforderung erfüllen, insbesondere erfindungsgemäße Stabilisatorkombinationen, die keine salzbasierten Komponenten enthalten. Demgegenüber sind klassische, salzbasierte Kupferstabilisatoren für diese Anwendungen nicht geeignet.

Diese Versuche und Vergleichsversuche zeigen also erneut, dass die erfindungsgemäß stabilisierten Polyamide hervorragende Eigenschaftsprofile aufweisen. Mit den erfindungsgemäß einzusetzenden Stabilisatorkomponenten können gezielt Eigenschaften über einen breiten Bereich einer Matrix an Eigenschaften gesteuert werden. Einerseits ist es möglich die mechanische Stabilität des zu stabilisierenden Polyamids über einen weiten Bereich einzustellen, der selbst bei geringen Einsatzmengen weit über dem liegt, was mit herkömmlichen phenolischen Stabilisatoren im niedrigen bis mittleren Temperaturbereich zu erreichen ist. Gleichzeitig können auch stabilisierte Polyamide erhalten werden, die eine hohe Kriechstromfestigkeit aufweisen (hohe CTI-Werte) und keine oder nur eine geringe Verfärbungsneigung nach Konditionierung zeigen. Dies bestätigt erneut das hervorragende Eigenschaftsprofil der erfindungsgemäß einzusetzenden Stabilisatorkombination.

Um insbesondere im Vergleich mit den bekannten phenolischen Stabilisatoren die überraschende Wirksamkeit der erfindungsgemäß einzusetzenden Stabilisatoren zu demonstrieren, wurden für unterschiedliche Kombinationen die Halbwertszeiten der Bruchdehnung für Zusammensetzungen mit PA 6.6 evaluiert.

**Tabelle 5: Halbwertszeit [h] der Bruchdehnung von Polyamid 6.6 in Abhängigkeit von der Stabilisierung.**

| Vergleichsversuche mit phenolischen Antioxidantien und Kupferstabilisatoren (erfinderische Kombinationen); | | | | |
|---|---|---|---|---|
| Messung der Bruchdehnung an den entsprechenden Prüfkörpern. | | | | |
| Es wurde die Zeit bestimmt, bis die Bruchdehnung die Hälfte des Ausgangswertes erreicht (Halbwert-Messung). | | | | |
| Alterungstemperatur [°C] | 120°C | 140°C | 150°C | 180°C |
| Ohne Stabilisator | 400 h | 100 h | 50 h | 24 h |
| 0,5% B1171 (Phenol / Phosphit Blend) | 1000 h | 320 h | 200 h | 30 h |
| CuI(TPP)2/ Phosphat1 (33ppm Cu, 400ppm Halogen) | 2200 h | 900 h | 600 h | 220 h |
| CuI / Phosphat 1 (33ppm Cu, 400ppm Halogen) | 1500 h | 800 h | 550 h | 210 h |
| CuI(TPP)2/ Phosphat1 (66ppm Cu, 800ppm Halogen) | 4600 h | 1600 h | 900 h | 230 h |
| CuI / Phosphat 1 (66ppm Cu, 800ppm Halogen) | 3900 h | 1350 h | 800 h | 230 h |

Die Daten der obigen Tabelle zeigen, dass insbesondere auch bei 120°C und 140°C in Polyamid 6.6 eine bessere (längere) Erhaltung der Bruchdehnung erreicht wird mit den erfinderischen Varianten gegenüber einem klassischen Phenol/Phosphit basierten System (B1171). Gleichzeitig wird deutlich, dass die erfindungsgemäße Verwendung auch gegenüber Temperaturspitzen von oberhalb 150°C Schutz bietet, Temperaturbereichen, in denen Stabilisatoren auf Basis Phenol/Phosphit nur eine sehr geringe Wirkung aufweisen. Dies gilt insbesondere für Temperaturen im Bereich 170°C und höher, bei denen eine Effektivität dieser Stabilisatoren nicht mehr gegeben ist. Aufgrund der hohen Wirksamkeit der erfindungsgemäßen Stabilisatoren können auch mit niedrigen Kupfer- und Halogenkonzentrationen im Polyamid sehr gute Langzeitgebrauchseigenschaften der betreffenden Werkstoffe über einen breiten Temperaturbereich erzielt werden. Aufgrund der niedrigen dafür erforderlichen Einsatzkonzentrationen können unter anderem helle Farben, gute elektrische Eigenschaften, niedrige Kosten für die Stabilisierung und eine deutlich reduzierte Neigung zur Elektrokorrosion erreicht werden.

## Patentansprüche

1. Verfahren zur Stabilisierung von Polyamiden bei Temperaturen von weniger als 150°C, **dadurch gekennzeichnet, dass** ein Polyamid mit einer Kupferverbindung und einem halogenhaltigen aliphatischen Phosphat vermischt wird.

2. Verwendung einer Zusammensetzung umfassend eine Kupferverbindung und ein halogenhaltiges aliphatisches Phosphat zur Stabilisierung von Polyamiden bei Temperaturen von weniger als 150°C.

3. Verfahren nach Anspruch 1 oder Verwendung nach Anspruch 2, **dadurch gekennzeichnet, dass** die Stabilisierung von Polyamiden bei Temperaturen von 145°C oder weniger, insbesondere bei Temperaturen von 130°C oder weniger erfolgt.

4. Verfahren nach Anspruch 1 oder 3 oder Verwendung nach Anspruch 2 oder 3, **dadurch gekennzeichnet, dass** die Kupferverbindung ein Kupfer(I)salz, ein Kupfer(II)salz oder ein Kupferkomplex ist.

5. Verfahren oder Verwendung nach Anspruch 4, **dadurch gekennzeichnet, dass** das Kupfer(I)salz ausgewählt ist aus Cul, CuBr, CuCI, CuCN, Cu₂O oder Gemischen daraus.

6. Verfahren oder Verwendung nach Anspruch 4, **dadurch gekennzeichnet, dass** das Kupfer(II)Salz ausgewählt ist aus Kupferacetat, Kupferstearat, Kupfersulfat, Kupferpropionat, Kupferbutyrat, Kupferlactat, Kupferbenzoat, Kupfernitrat, CuO, CuCl₂ oder Gemischen daraus.

7. Verfahren oder Verwendung nach Anspruch 4, **dadurch gekennzeichnet, dass** der Kupferkomplex ausgewählt ist aus Kupferacetylacetonat, Kupferoxalat, Kupfer-EDTA, [Cu(PPh₃)₃X], [Cu₂X₂(PPH₃)₃], [Cu(PPh₃)X], [Cu(PPh₃)₂X], [CuX(PPh₃)(bipy)], [CuX(PPh₃)(biquin)] wobei X=Cl, Br, I, CN, SCN oder 2-Mercaptobenzimidazol ist.

8. Verfahren oder Verwendung nach einem der Ansprüche 1 bis 7, **dadurch gekennzeichnet, dass** das halogenhaltige aliphatische Phosphat ein Tris(halohydrocarbyl)phosphat oder ein Phosphonatester ist.

9. Verfahren oder Verwendung nach Anspruch 8, **dadurch gekennzeichnet, dass** das Tris(halohydrocarbyl)phosphat ausgewählt ist aus Tris(3-brom-2,2-bis(bromomethyl)propyl)phosphat, Tris-(dibromoneopentyl)phosphat Tris(trichloroneopentyl)phosphat, Tris(bromodichlorneopentyl)phosphat, Tris(chlordibromoneopentyl)phosphat, Tris(tribromoneopentyl)phosphat oder Gemischen daraus.

10. Verfahren oder Verwendung nach einem der Ansprüche 1 bis 9, ferner umfassend mindestens eine halogenierte aromatische Verbindung und/oder mindestens ein Polyol mit 2 oder mehr Hydroxylgruppen, bevorzugt ein Polyol mit 2 bis 12 Hydroxylgruppen und einem Molekulargewicht von 64 bis 2000 g/mol, besonders bevorzugt Pentaerythritol, Dipentaerythritol und Tripentaerythritol, insbesondere Dipentaerythritol.

11. Verfahren oder Verwendung nach Anspruch 10, **dadurch gekennzeichnet, dass** die halogenierte aromatische Verbindung ausgewählt ist aus bromierten Polystyrolen, Poly(pentabrombenzyl)acrylaten, Tris(2,4-dibromphenyl)phosphat, Tris(2,4-dichlorphenyl)phosphat, Tris(2,4,6-tribromphenyl)phosphat oder Gemischen daraus.

12. Verfahren oder Verwendung nach einem der Ansprüche 1 bis 11, **dadurch gekennzeichnet, dass** das Polyamid ausgewählt ist aus verstärktem oder unverstärktem PA 6, PA 6.6, PA 4.6, PA 11, PA 12 oder Gemischen daraus.

13. Verfahren zur Stabilisierung von Polyamiden über einen Temperaturbereich von weniger als 150°C und mehr als 150°C, **dadurch gekennzeichnet, dass** ein Polyamid mit einer Kupferverbindung und einem halogenhaltigen aliphatischen Phosphat vermischt wird.

14. Verwendung einer Zusammensetzung umfassend eine Kupferverbindung und ein halogenhaltiges aliphatisches Phosphat zur Stabilisierung von Polyamiden über einen Temperaturbereich von weniger als 150°C und mehr als 150°C.

15. Verfahren nach Anspruch 13 oder Verwendung nach Anspruch 14, wobei die Kupferverbindung, das halogenhaltige aliphatische Phosphat und/oder das Polyamid wie in einem der Ansprüche 3 bis 12 sind.
